# EUROPÄISCHE PATENTSCHRIFT

(11) **EP 0 591 616 B1**
(45) Veröffentlichungstag und Bekanntmachung des Hinweises auf die Patenterteilung: **18.09.1996**
(21) Anmeldenummer: 93109577.2
(22) Anmeldetag: 16.06.1993
(51) Int. Cl.: H01M 2/16

(54) **Hydrophiliertes Separatorenmaterial aus Faservliesstoff für elektrochemische Energiespeicher und Verfahren zu seiner Herstellung**
Nonwoven hydrophilic material for electrochemical battery separator and method of manufacturing
Matériau hydrophile non-tissé pour séparateur d'accumulateur électrochimique et procédé de fabrication

(30) Priorität: 05.10.1992 DE 4233412
(43) Veröffentlichungstag der Anmeldung: 13.04.1994
(73) Patentinhaber: Firma Carl Freudenberg, D-69469 Weinheim (DE)
(72) Erfinder: Hoffmann, Harald, Dr., D-6915 Dossenheim (DE); Schwöbel, Rolf, D-6948 Waldmichelbach (DE)

(56) Entgegenhaltungen:
- PATENT ABSTRACTS OF JAPAN vol. 17, no. 473 (E-1423)27. August 1993 & JP-A-05 114 397 (SANYO ELECTRIC CO. LTD.) 7. Mai 1993
- DATABASE WPI Week 8203, Derwent Publications Ltd., London, GB; AN 82-04521E & JP-A-56 156 668 (TOKYO SHIBAURA ELEC. LTD.) 3. Dezember 1981

## Beschreibung

Gegenstand dieser Erfindung sind flächige, flexible, elektrolytbeständige, ausschließlich aus Faservliesstoff bestehende Separatorenmaterialien, die schnell und vollständig mit dem wäßrigen alkalischen Elektrolyt benetzbar sind. Ferner befaßt sich diese Erfindung mit einem Verfahren zur Herstellung eines solchen Separators. Zum Einsatz kommen dabei meist Vliesstoffe aus Polyamid- und/oder Polyolefinfasern wegen ihrer Flexibilität und Elektrolyt-Beständigkeit.

Diese Separatoren dienen dazu, in elektrochemischen Energiespeichern mit flüssigem alkalischem Elektrolyt eine Berührung von positiven und negativen Elektroden und damit einen unerwünschten Stromfluß zu vermeiden, ohne dabei jedoch den Durchgang der Ionen der Elektrolytflüssigkeit wesentlich zu behindern.

Mit wäßrigem alkalischen Elektrolyt arbeiten zum Beispiel Nickel-Cadmium-Zellen oder Nickel-Wasserstoff- und Nickel-Metallhydrid-Akkumulatoren. In diesem Fall bestehen sowohl die positiven wie auch die negativen Elektroden aus dünnen, rollfähigen Bändern aus den aktiven Massen. Zwischen diesen beiden wird das Separatorenmaterial aus Faservliesstoff der eingangs genannten Art eingelegt und dann zusammen mit den Elektroden eingerollt. Nach dem Einrollen dieses aus positiver und negativer Elektrode und aus zwei Lagen Separatorenmaterial bestehenden Vierschichtgebildes wird der entstandene Wickel in ein becherförmiges Gehäuse aus vernickeltem Stahlblech gesteckt, welches dann mit hochkonzentrierter wäßriger Kalilauge gefüllt wird. Der Elektrolyt muß dabei schnell vom verwendeten Vliesstoff aufgesaugt und in dessen Poren gelagert werden.

Ungünstigerweise sind Polyamid- oder Polyolefinfaser-Separatoren von Natur aus hydrophob und können deshalb die wichtige Anforderung einer schnellen und guten Benetzbarkeit im oben geforderten Maße durch den Elektrolyt nicht von selbst erfüllen. Eine schlechte Benetzbarkeit führt jedoch zu Störungen bei der Herstellung der Zellen, da der zudosierte Elektrolyt nicht genügend schnell aufgenommen und im Inneren der Zelle verteilt werden kann, so daß bei der folgenden Elektrolytzugabe dieser überlaufen und so die Produktionsmittel verschmutzen muß. Auch im späteren Betrieb des Energiespeichers kommt es bei schlechter Benetzbarkeit zur Ansammlung von Gasblasen auf und in dem Separatorenmaterial, welche den Ionendurchgang nachhaltig behindern und dadurch die Leistungsfähigkeit des Akkumulators spürbar vermindern, ja sogar blockieren. Bei gasdichten Zellen entsteht in diesem Fall zusätzlich ein Überdruck, der zum Bersten des Zellgehäuses führen kann.

Es wurden verschiedene Versuche unternommen, Separatoren aus an sich hydrophoben Faservliesstoff-Materialien für eine Verwendung in einem elektrochemischen Energiespeicher ausreichend hydrophil zu machen.

So wird zum Beispiel in US-3,947,537 eine Behandlung der Faseroberfläche mit einem oberflächenaktiven Mittel, einem Tensid, beschrieben.

DE-A 25 43 149 erwähnt den Zusatz hydrophiler Substanzen bereits zur Polymerschmelze beim Erspinnen von Filamenten, die als Separatoren Verwendung finden sollen.

Beide Verfahren haben sich nicht bewährt, da jedes Einbringen von zusätzlichen Chemikalien in das empfindliche chemische System eines Akkumulators zu Störungen führen kann, deren Ursachen bei Anwesenheit vieler verschiedener chemischer Individuen nur schwer lokalisierbar sind. Es ist deshalb vorzuziehen, Separatoren nur aus genau definierten Faserwerkstoffen zu konstruieren und nur solche hydrophilierenden Additive zu verwenden, die im Energiespeicher-Betrieb keine Störungen verursachen.

Hydrophilierte Separatorenmaterialien aus Vliesstoff für elektrochemische Energiespeicher mit wäßrigem alkalischem Elektrolyt werden überwiegend durch thermische Verfestigung eines durch Krempeln gelegten Faservlieses aus Polyamid- und/oder aus Polyolefinfasern gefertigt. 30 bis 50 Gew.-% der eingesetzten Fasern oder Faseranteile bestehen dabei aus einem niedriger erweichenden Werkstoff als der Rest.

Das Faservlies wird in einem Ofen auf eine Temperatur erhitzt, die oberhalb des Erweichungsbereiches der einen Komponente und unterhalb desjenigen der zweiten Komponente der Fasermischung liegt. Die Bindung erfolgt dann durch Verpressen am Auslauf des Ofens, wobei der Vliesstoff auf die gewünschte Enddicke, zweckmäßig zwischen zwei Walzen, kalibriert und dann abgekühlt wird. Die vorher erweichten Fasern sind danach autogen zumindest teilweise mit denjenigen ihrer Umgebung verschweißt. Ein solches Verfahren ist zum Beispiel beschrieben in DE-OS 21 64 901.

Die Aufgabe der vorliegenden Erfindung besteht darin, die einen Vliesstoff für ein Separatorenmaterial bildenden Polyolefin- und Polyamidfasern hydrophil zu machen, wobei der Einsatz von Tensiden vor oder nach der Herstellung des Vliesstoffs entbehrlich und dennoch eine Benetzbarkeit des Vliesstoffs für 30%-ige, wäßrige Alkalilösung gewährleistet ist.

Die diese Hydrophilie erzeugende Substanz soll mit allen Materialien des Energiespeichers verträglich sein.

Es wurde nun überraschend gefunden, daß die Benetzbarkeit, das heißt die Hydrophilie, des im Ofen bei den dort herrschenden Temperaturen völlig ausgetrockneten Vliesstoffs aus Polyamid- und/oder Polyolefinfasern signifikant durch gleichmäßiges Besprühen mit entionisiertem Wasser nach dem Abkühlen und vor dem Aufrollen verbessert werden kann, wenn man 0,5 bis 7 Gew.-%, bezogen auf das Trockengewicht des den Ofen verlassenden, auf Raumtemperatur abgekühlten Vliesstoffs, entionisiertes Wasser einsetzt.

Solchermaßen befeuchtete Separatorenmaterialien zeigen eine, bei Lagerung in Raumklima, bis zu 5 Tage stabile, signifikante Verbesserung der Benetzbarkeit für wäßrige 30%-ige KOH-Lösungen, ohne daß irgendwelche Tenside verwendet zu werden bräuchten.

Die nachfolgenden Beispiele verdeutlichen die Erfindung, wobei das Ausmaß der Hydrophilierung beobachtet wird.

### Beispiel 1

Auf einer Krempel wird aus einer Fasermischung von 30 Gew.-% Polypropylenfasern, dtex 2/38 mm, und von 70 Gew.-% Bikomponentenfasern, dtex 3,3/64 mm, aus Polypropylen und Polyethylen in Seite-an-Seite-Anordnung ein Faservlies mit einem Gewicht von 72 g/m² hergestellt. Dieses Vlies wird in einem Ofen auf eine Temperatur von 145°C erhitzt und zu einer Dicke von 0,22 mm zwischen zwei kalten Walzen kalibriert. Ein Teil dieses so verfestigten Vliesstoffs wird durch Aufsprühen von insgesamt 1 g/m² entionisiertem Wasser vor dem Abwickeln befeuchtet. Ein zweiter Teil bleibt unbefeuchtet.

Anschließend wird die Benetzbarkeit mit 30%-iger wäßriger KOH-Lösung dadurch bestimmt, daß die kapillare Saughöhe nach einer Minute und nach zehn Minuten bestimmt wird. Das mit Wasser, wie oben beschrieben, vorbefeuchtete Separatorenmaterial erreicht eine Saughöhe von 35 mm nach einer Minute und 83 mm nach zehn Minuten, während bei dem unbefeuchteten Produkt nach einer Minute lediglich 16 mm und nach zehn Minuten 54 mm Saughöhe gefunden werden können.

### Beispiel 2

Auf einer Krempel wird aus einer Fasermischung von 50 Gew.-% Polyamid 6.6-Fasern, dtex 1,7/40 mm, und von 50 Gew.-% einer Bikomponentenfaser der Zusammensetzung wie in Beispiel 1 ein Faservlies mit einem Gewicht von 80 g/m² hergestellt. Dieses Vlies wird in einem Ofen auf eine Temperatur von 145°C erhitzt und zu einer Dicke von 0,27 mm kalibriert. Ein Teil dieses so hergestellten Vliesstoffs wird durch Aufsprühen von insgesamt 1 g/m² entionisiertem Wasser vor dem Aufwickeln befeuchtet. Ein zweiter Teil bleibt unbefeuchtet.

Die Benetzbarkeitsprüfung mit 30%-iger wäßriger KOH-Lösung ergibt, daß das vorbefeuchtete Separatorenmaterial eine Saughöhe von 30 mm nach einer Minute und von 65 mm nach zehn Minuten erreicht, während bei dem unbefeuchteten Produkt nach einer Minute lediglich 8 mm und nach zehn Minuten 35 mm Saughöhe gefunden werden.

### Beispiel 3

Auf einer Krempel wird aus einer Fasermischung von 65 Gew.-% Polyamid 6.6-Fasern, dtex 1,7/40 mm, und von 35 Gew.-% einer Polyamidfaser, dtex 3,3/40 mm, die zum Teil aus Polyamid 6 und zum Teil aus Polyamid 6.6 besteht und als Kern-/Mantel-Bikomponentenfaser ausgebildet ist, ein Faservlies mit einem Gewicht von 70 g/m² hergestellt. Dieses Vlies wird in einem Ofen bei einer Temperatur von 235°C aufgeheizt und zu einer Dicke von 0,25 mm zwischen zwei kalten Walzen reduziert. Ein Teil dieses so hergestellten und verfestigten Vliesstoffs wird durch Aufsprühen von 1 g/m² entionisiertem Wasser vor dem Aufwickeln befeuchtet. Ein zweiter Teil bleibt unbefeuchtet.

Die Benetzbarkeitsprüfung mit 30%-iger wäßriger KOH-Lösung ergibt, daß das vorbefeuchtete Material eine kapillare Saughöhe von 22 mm nach einer Minute und von 67 mm nach zehn Minuten erreicht, während bei dem unbefeuchteten Produkt nach einer Minute 5 mm und nach zehn Minuten lediglich 25 mm gefunden werden.

Der in den Beispielen beschriebene Effekt der Verbesserung der Benutzbarkeit durch das erfindungsgemäße Verfahren ist dauerhaft: Selbst nach fünf Tagen Lagerung unter raumklimatischen Bedingungen ist die nach zehn Minuten erreichbare Saughöhe der vorbefeuchteten Separatorenmaterialien noch um 22% (Beispiel 1), 27% (Beispiel 2) beziehungsweise 29% (Beispiel 3) höher als die der zugehörigen, unbefeuchteten Parallelproben.

## Patentansprüche

1. Hydrophiliertes Separatorenmaterial aus Vliesstoff, einsetzbar in elektrochemischen Energiespeichern mit wäßrigen, alkalischen Elektrolyten, wobei der Vliesstoff aus einer Mischung von Polyamid- und/oder Polyolefinfasern mit unterschiedlichem Erweichungsbereich besteht und in sich durch Erweichen seiner niedriger schmelzenden Faseranteile durch Hitze und Druck verschweißend verfestigt und komprimiert ist, dadurch gekennzeichnet, daß das Separatorenmaterial vor seiner Verwendung mit 0,5 bis 7 Gew.-%, bezogen auf sein Trockengewicht, entionisiertem Wasser befeuchtet ist.

2. Verfahren zur Herstellung eines hydrophilierten Separatorenmaterials aus Vliesstoff, einsetzbar in elektrochemischen Energiespeichern mit wäßrigen, alkalischen Elektrolyten, wobei man eine Mischung von Polyamid- und/oder Polyolefinfasern mit unterschiedlichem Erweichungsbereich, die niedriger schmelzenden Fasern in einem Gewichtsanteil von 30 bis 50%, auf einer Krempel zu einem Vlies legt und dieses in einem Ofen durch Erweichen nur der niedriger schmelzenden Faseranteile, anschließende Kalibrierung durch Druck zur gewünschten Enddicke und Abkühlen zu einem autogen verschweißten Vliesstoff verfestigt, dadurch gekennzeichnet, daß man den auf Raumtemperatur abgekühlten Vliesstoff mit insgesamt 0,5 bis 7 Gew.-%, bezogen auf sein Gewicht, entionisiertem Wasser gleichmäßig besprüht und ihn anschließend aufwickelt.

## Claims

1. A hydrophilized separator material of a nonwoven which can be employed in electrochemical batteries with aqueous, alkaline electrolytes, the nonwoven being composed of a mixture of polyamide and/or polyolefin fibres of different softening range and being bonded, by welding, and compressed in itself by softening its lower-melting fibre contents by heat and pressure, characterized in that the separator material is moistened with from 0.5 to 7 % by weight, based on its dry weight, of deionized water before its use.

2. A process for the production of a hydrophilized separator material of a nonwoven which can be employed in electrochemical batteries with aqueous, alkaline electrolytes, in which process a mixture of polyamide and/or polyolefin fibres of different softening range, the lower-melting fibres in a weight content of from 30 to 50%, is laid on a carding machine to give a nonwoven and this is bonded in an oven by softening only the lower-melting fibre contents, subsequent calibration by pressure to give the desired final thickness and cooling to give an autogenously welded nonwoven, characterized in that the nonwoven which has been cooled to room temperature is uniformly sprayed with a total of from 0.5 to 7 % by weight, based on its weight, of deionized water and is then wound up.

## Revendications

1. Matériau hydrophile non-tissé pour séparateur, utilisable dans des accumulateurs électrochimiques avec des électrolytes alcalins aqueux, le non-tissé étant constitué d'un mélange de fibres de polyamides et/ou de polyoléfines avec un domaine de ramollissement différent et étant consolidé par soudage et comprimé, par ramollissement de ses fractions de fibres à plus basse température de fusion par la chaleur et par la pression, caractérisé en ce que le matériau pour séparateur est humidifié, avant son utilisation, avec 0,5 à 7 % en poids, par rapport à son poids sec, d'eau déminéralisée.

2. Procédé de fabrication d'un matériau hydrophile non-tissé pour séparateur, utilisable dans des accumulateurs électrochimiques avec des électrolytes alcalins aqueux, dans lequel on étend un mélange de fibres de polyamides et/ou de polyoléfines avec un domaine de ramollissement différent, les fibres à plus basse température de fusion en une fraction pondérale de 30 à 50 %, sur une carde en un non-tissé et on consolide celui-ci dans un four par ramollissement uniquement des fractions de fibres à plus basse température de fusion, par calibrage subséquent sous pression jusqu'à l'épaisseur finale souhaitée et par refroidissement en un non-tissé soudé de manière autogène, caractérisé en ce qu'on pulvérise sur le non-tissé refroidi à température ambiante en tout 0,5 à 7 % en poids, par rapport à son poids, d'eau déminéralisée de manière uniforme et en ce qu'on l'enroule ensuite.
